# FASCICULE DE BREVET EUROPEEN

(11) **EP 2 878 086 B1**
(45) Date de publication et mention de la délivrance du brevet: **14.12.2016**
(21) Numéro de dépôt: 13759549.2
(22) Date de dépôt: 24.07.2013
(51) Int. Cl.: H04B 10/032

(54) **SYSTÈME DE MULTI-TRANSMISSION UNIDIRECTIONNELLE**
UNIDIREKTIONALE MULTICAST-SYSTEME
UNIDIRECTIONAL MULTICAST SYSTEM

(30) Priorité: 24.07.2012 FR 1202096
(43) Date de publication de la demande: 03.06.2015
(73) Titulaire: Cassidian CyberSecurity SAS, 78990 Elancourt (FR)
(72) Inventeur: BRETON, Sébastien, 78370 Plaisir (FR); FRANK, Eric, 95280 Jouy le Moutier (FR)
(74) Mandataire: Cabinet Camus Lebkiri
(86) Numéro de dépôt international: PCT/FR2013/000203
(87) Numéro de publication internationale: WO 2014/016477

(56) Documents cités:
- EP-A1- 2 117 138
- WO-A2-01/95525
- JP-A- 56 094 850

## Description

### Domaine de l'invention

La présente invention concerne d'une manière générale le domaine de la transmission optique. Plus particulièrement, l'invention a pour but de proposer un système de multi-transmission optique unidirectionnelle. On entend par multi-transmission, la transmission d'un message de données provenant d'une entité source et dupliqué en plusieurs messages identiques à transmettre vers une entité cible.

### Etat de la technique et problèmes techniques rencontrés

Il est connu un dispositif de transmission optique unidirectionnel comprenant un serveur source pour transmettre un message vers un serveur cible par l'intermédiaire d'un dispositif de type diode optique. Le dispositif, à diode optique a pour objectif la transmission de message dans un seul sens depuis le serveur source vers le serveur cible. Un tel système permet au serveur cible de traitement de données sensibles de recevoir des données depuis l'extérieur et empêche audit serveur cible la sortie de données sensibles. Aucun retour de données, tel qu'un acquittement de réception, n'est possible entre le serveur source et de le serveur cible. Un inconvénient majeur de cet état de la technique est que si la transmission est défectueuse ou si le serveur cible est indisponible le message transmis ne peut être reçu et le serveur source ne peut savoir s'il doit retransmettre le message.

Il existe donc un besoin d'une transmission optique unidirectionnelle fiable et intègre de messages depuis une entité source assurant une bonne réception du message par une entité cible. On entend par transmission intègre une transmission sans erreur, le message reçu étant sensiblement identique au message transmis par le serveur source.

### Exposé de l'invention

La présente invention vise à résoudre l'ensemble des inconvénients de l'état de la technique.

L'invention a donc pour objet un système de transmission d'un message depuis une entité source vers une entité cible, le système comprenant une unité d'entrée connectée à l'entité source pour transmettre le message par l'intermédiaire d'un dispositif de transmission optique à une unité de sortie redirigeant le message vers l'entité cible, le système étant caractérisé en ce que le dispositif de transmission optique est apte:
- à transmettre de manière unidirectionnelle le message depuis l'unité d'entrée vers l'unité de sortie, et
- à dupliquer un signal optique d'entrée contenant le message en au moins deux signaux optiques de sortie contenant respectivement le message à transmettre à l'unité de sortie.

Selon une première réalisation le dispositif de transmission optique comporte donc :
- un commutateur optique d'entrée pour recevoir le message provenant de l'entité cible et inclure le message dans un signal optique à transmettre à un duplicateur optique par l'intermédiaire d'une première liaison optique,
- le duplicateur optique pour dupliquer le signal optique reçu en au moins deux signaux optiques à transmettre respectivement à au moins deux commutateurs optiques de sortie par l'intermédiaire respectivement de deux liaisons optiques, et
- au moins les deux commutateurs optiques de sortie pour retransmettre les messages des deux signaux optiques dupliqués vers l'entité cible.

La transmission du message est unidirectionnelle grâce au duplicateur optique qui fonctionne comme une diode optique bloquant ainsi tout retour de message depuis l'entité cible vers l'entité source.

Le duplicateur optique du système de transmission unidirectionnelle de l'invention assure également la multi-transmission par duplication du message optique reçu en au moins deux signaux optiques contenant le message, puis par transmission de chacun de ces messages à l'entité cible par l'intermédiaire respectivement d'au moins les deux liaisons optiques et d'au moins les deux commutateurs de sortie. Ainsi, si une des deux liaisons optiques ou si l'un des commutateurs de sortie est défaillant ou indisponible l'entité cible peut recevoir le message provenant de la liaison optique ou du commutateur non-défaillant. Ceci permet d'augmenter la probabilité d'une transmission intègre peu onéreuse vers l'entité cible sans boucle de retour depuis l'entité cible.

Selon une deuxième réalisation, le dispositif de transmission optique comprend un duplicateur optique de secours relié en entrée au commutateur optique d'entrée et en sortie aux deux commutateurs optiques de sortie.

Selon troisième réalisation le dispositif de transmission optique comprend un commutateur optique de secours relié à l'entrée d'au moins un duplicateur optique de secours, le duplicateur optique de secours étant relié en sortie aux deux commutateurs optiques de sortie.

Le dispositif de transmission optique peut comprendre également une liaison optique de retour pour transmettre à l'unité d'entrée un signal dupliqué. Ceci peut correspondre à une boucle de retour contrôlant la bonne réception du message jusqu'au duplicateur optique. Ainsi on peut considérer que la première liaison optique et le duplicateur optique fonctionnent correctement.

L'invention comporte également l'une quelconque des caractéristiques suivantes :
- un mécanisme de duplication logicielle du message supervisé par l'unité d'entrée pour transmettre une série de messages identiques,
- un mécanisme de marquage des messages par session et par duplication logicielle supervisé par l'unité d'entrée,
- un mécanisme de dé-doublonnage de message supervisé par l'unité de sortie pour détecter les messages dupliqués par logiciel et/ou par le duplicateur optique,
- un mécanisme de correction et de reconstruction du message supervisé par l'unité de sortie, et
- un mécanisme de battement de coeur généré par l'unité d'entrée et contrôlé par l'unité de sortie pour contrôler le fonctionnement du système de transmission.

### Brève description des figures

L'invention sera mieux comprise à la lecture de la description qui suit et à l'examen des figures qui l'accompagnent. Celles-ci ne sont présentées qu'à titre illustratif mais nullement limitatif de l'invention. Les figures montrent :
- la figure 1 : une représentation schématique d'un système de transmission unidirectionnel selon l'invention ;
- la figure 2 une représentation schématique d'une première réalisation d'un dispositif de transmission optique unidirectionnel d'un système de transmission à haute disponibilité selon l'invention, et
- la figure 3 : une représentation schématique d'une deuxième réalisation d'un dispositif de transmission optique unidirectionnel d'un système de transmission à haute disponibilité selon l'invention.

### Description de l'invention

On note dès à présent que les figures ne sont pas à l'échelle.

Les réalisations suivantes sont des exemples. Bien que la description se réfère à un ou plusieurs modes de réalisation, ceci ne signifie pas nécessairement que chaque référence concerne le même mode de réalisation, ou que les caractéristiques s'appliquent seulement à un seul mode de réalisation. De simples caractéristiques de différents modes de réalisations peuvent également être combinées pour fournir d'autres réalisations.

Dans la suite de la description les termes suivants sont définis comme tel :
- un message comprend des données utiles à transmettre depuis l'entité source vers l'entité cible,
- un paquet de données comprend un entête de transmission et un message, et
- un signal optique comprend le paquet et donc le message.

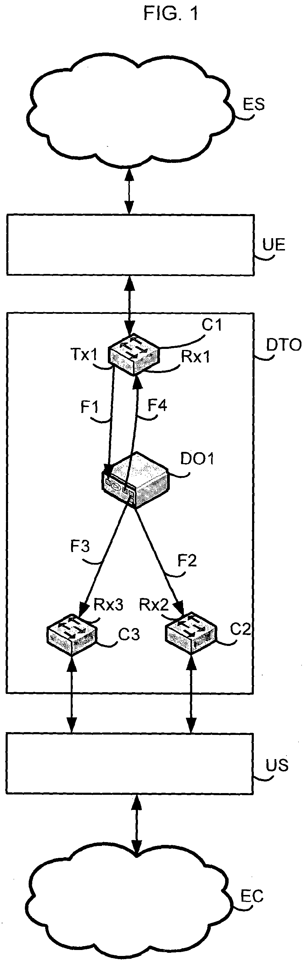

Le système de multi-transmission unidirectionnelle selon l'invention, représenté à la figure 1, permet la transmission intègre de messages inclus dans des paquets entre une entité source et une entité cible. L'entité source peut être un terminal d'utilisateur tel qu'un ordinateur ou un serveur. L'entité source peut être également un ensemble de terminaux et de serveurs reliés en un réseau de communication, par exemple un réseau Internet ou un réseau interne d'entreprise.. L'entité cible peut également comprendre un terminal d'utilisateur ou un serveur ou un ensemble de terminaux et de serveurs reliés en réseau de communication, tel qu'un réseau Internet ou un réseau interne d'entreprise. Le système de multi-transmission unidirectionnelle de l'invention assure la transmission dans un seul sens, de messages depuis l'entité source vers l'entité cible. Selon la nature des données utiles traitées dans l'une des deux entités, le système de transmission prévient soit de la fuite de données sensibles provenant de l'entité cible, soit d'une intrusion de l'entité cible vers l'entité source.

Dans le premier cas, l'entité cible peut être un réseau interne d'entreprise traitant des données à accès limité telles que des données confidentielles médicales ou données confidentielles groupe. L'entité source peut être un réseau Internet traitant des données accessibles par tout utilisateur ou de moindre sensibilité que les données traitées par l'entité cible. Le système de transmission assure ainsi la transmission unidirectionnelle de données provenant de l'entité source tout en empêchant une fuite de données sensibles depuis l'entité cible vers l'entité source. La prévention de l'intrusion de l'entité source dans ce cas peut être assurée par des logiciels ou équipements de type pare-feu.

Dans le deuxième cas, l'entité cible peut être un réseau Internet et l'entité source un réseau interne entreprise, les données traitées par l'entité cible étant des données moins sensibles que les données traitées par l'entité source. Le système de transmission assure ainsi la transmission unidirectionnelle de données provenant de l'entité source tout en empêchant une intrusion de l'entité cible vers l'entité source. La prévention de la fuite de données sensibles depuis l'entité source peut être assurée par des logiciels ou équipements de type pare-feu.

Le système de la figure 1 comprend, une unité d'entrée UE connectée à l'entité source ES, un dispositif de transmission optique DTO connecté à l'unité d'entré UE et une unité de sortie US connectée entre le dispositif de sortie optique et l'entité cible EC.

Un paquet provenant de l'entité source ES est transmis par l'unité d'entrée UE vers l'unité de sortie US via le dispositif de transmission optique DTO pour être redirigé vers l'entité cible EC. De tels paquets transitant entre l'entité source et l'entité cible peuvent être des paquets basés sur le protocole de télécommunication UDP (User Data Protocol). Le protocole UDP permet la transmission de paquets de manière simple entre deux entités chacune définie par une adresse IP et un numéro de port. Le protocole UDP fonctionne sans négociation entre les deux entités. De ce fait, le protocole UDP ne garantit pas la livraison des paquets à destination de l'entité cible. Le système de l'invention a donc pour objectif une transmission intègre et de grande fiabilité d'un message contenu dans un paquet entre l'entité source et l'entité cible sans acquittement par l'entité cible en retour.

Selon une autre implémentation les paquets transitant entre l'entité source et l'entité cible peuvent être des paquets basés sur le protocole de télécommunication TCP (Transmission Control Protocol). Le protocole TCP fonctionne avec négociation entre les deux entités. Dans le cas de l'invention, un dispositif de simulation d'acquittement de messages TCP peut être connecté à l'unité d'entrée. Ainsi, le système assure la transmission unidirectionnelle de message inclus dans un paquet sans besoin d'acquittement par l'entité cible. L'acquittement nécessaire au bon fonctionnement du protocole TCP est assuré par le dispositif de simulation.

L'unité d'entrée UE permet également d'émettre ou de recevoir des paquets de données de type IP (Internet Protocol), notamment des messages TCP (Transmission C-ontrol Protocol), UDP (User Data Protocol), ICMP (Internet Control Message Protocol) ou SNMP (Simple Network Management Protocol). L'unité UE a pour rôle :
- de configurer le système de transmission par exemple en appliquant des règles de filtrage de paquets, une politique de contrôle d'accès, des paramètres de répétition de messages à transmettre,
- de superviser le système de transmission en remontant des alertes de sécurité par la gestion d'un pare-feu, en transmettant des messages de contrôle à destination de l'unité de sortie,
- de transmettre des messages à destination de l'entité cible EC.

L'unité de sortie US a pour rôle de rediriger ou diffuser des messages transmis par l'unité UE d'entrée vers l'entité cible EC.

Le dispositif de transmission optique DTO a pour rôle de transmettre les paquets dans un unique sens depuis l'unité d'entrée vers l'unité de sortie.

Le dispositif de transmission comprend un commutateur optique d'entrée C1 connecté à l'unité d'entrée UE en tant qu'interface, telle qu'une interface Ethernet standard 1000BASE-T. Le commutateur C1 comprend une carte optique contenant un transmetteur Tx1 et un récepteur Rx1. Le commutateur C1 transmet le paquet via un signal optique.

Le commutateur d'entrée est connecté à un duplicateur optique D01, tel qu'un coupleur optique, par l'intermédiaire d'une première liaison optique F1, telle qu'une fibre optique. Le commutateur C1 transmet le signal optique converti au duplicateur optique D01 par l'intermédiaire de la liaison F1. Le duplicateur optique fonctionne comme une diode et bloque toute communication en sens inverse de l'unité de sortie vers l'unité d'entrée. Le duplicateur a également pour fonction de dupliquer le signal optique reçu en au moins deux signaux optiques à retransmettre vers l'unité de sortie. Les deux signaux optiques dupliqués comprennent chacun le même paquet. Le duplicateur optique est un duplicateur dit passif. On entend par duplication passive une duplication non supervisée par l'unité d'entrée ainsi tout signal optique provenant de l'entité source et transitant par le duplicateur sera dupliqué en au moins deux signaux optiques, les paquets inclus dans les signaux étant identiques. On entend par- paquets identiques, des paquets ayant la même entête et le même message. La duplication peut être mise en oeuvre au moyen d'un prisme faisant diverger le faisceau optique. Un autre mécanisme de duplication permet de séparer les longueurs d'ondes pour obtenir différents signaux optiques contenant des paquets identiques. Le duplicateur optique comprend au moins deux sorties optiques chacune connectée à un récepteur Rx2, Rx3 respectivement d'un premier et deuxième commutateur de sortie C2, C3 via respectivement une deuxième et une troisième liaisons optiques F2, F3. Chaque commutateur de sortie C2, C3 comprend une carte optique contenant un transmetteur Tx2, Tx3 et un récepteur Rx2, Rx3. Les commutateurs de sortie C2 et C3 sont connectés à l'unité de sortie en tant qu'interfaces telles que des interfaces Ethernet standard 1000BASE-T. Chaque commutateur de sortie récupère du signal optique reçu le paquet et le retransmet sur un signal électrique à l'unité de sortie US.

Le duplicateur optique assure la duplication du signal optique d'entrée en au moins deux signaux optiques comprenant respectivement deux paquets identiques et la répartition des ces deux signaux optiques sur les deux liaisons otiques F2 et F3. Les deux signaux dupliqués sont transmis respectivement vers les deux récepteurs Rx2 et Rx3 des commutateurs C2 et C3 par l'intermédiaire des liaisons F2 et F3.

En général, le duplicateur optique peut dupliquer un signal optique d'entrée en N signaux optiques à transmettre respectivement vers N commutateurs de sortie, N étant un nombre entier au moins égal à 2.

Le duplicateur optique peut également comprendre une troisième sortie connectée au récepteur Rx1 du commutateur d'entrée C1 par l'intermédiaire d'une quatrième liaison optique F4 afin de transmettre un troisième signal optique dupliqué au commutateur C1. Grâce à ce retour de signal, l'unité d'entrée contrôle le fonctionnement de la liaison optique F1 et du duplicateur optique D01.

Selon une réalisation de l'invention, les paquets ainsi reçus par l'unité de sortie sont redirigés dans leur totalité à l'entité cible qui les traitera.

Selon une variante, l'unité de sortie comprend un mécanisme de dé-doublonnage des messages dupliqués. Ce mécanisme de dé-doublonnage permet à l'unité de sortie de détecter la duplication des messages et de ne transmettre qu'un seul message vers l'entité cible. L'unité de sortie peut sélectionner parmi les messages dupliqués reçus, le message intègre. Ce mécanisme peut également être complété par un mécanisme de correction du message détectant et corrigeant les erreurs de transmission qui auraient pu survenir lors du transfert sur la liaison optique. Dans ce cas, l'unité de sortie reconstruit le message et le transmet à l'entité cible.

Le mécanisme de dé-doublonnage s'appuie sur un mécanisme de marquage de session de messages au niveau de l'entête du paquet dans l'unité d'entrée afin de faciliter le travail de dé-doublonnage dans l'unité de sortie. L'implémentation du mécanisme de marquage des messages dans le protocole UDP s'effectue via le champ port source de l'entête des paquets UDP. Cette plage de ports libres offre un nombre de bits utiles pour encoder différents paramètres utiles au sein du système de transmission.

Ainsi, un sous-champ de bits est réservé pour le marquage des messages indiquant si les messages reçus et à traiter appartiennent à la même session ou à une session différente. Par exemple, un sous-champ de 7 bits permet de gérer 128 sessions simultanées.

De même, un sous-champ de bits peut être réservé pour indiquer à l'unité de sortie une version d'encodage de message ou de tout autre programme actuellement en fonctionnement dans le système de transmission. Par exemple, un champ de 3 bits offre jusqu'à 8 versions logicielles différentes.

A la réception des paquets, l'unité de sortie détecte dans chaque paquet, en fonction du champ de marquage, à quelle session appartient le message. L'unité de sortie effectue ensuite un premier classement des messages selon la session et sélectionne le message intègre ou corrige le message en fonction des différents messages reçus de la même session. Enfin l'unité de sortie redirige le message sélectionné ou/et corrigé vers l'entité cible.

L'unité de sortie peut comprendre un mécanisme de correction de message. Selon une réalisation, à la réception d'au moins trois messages d'une même session, le mécanisme de correction est mis en oeuvre pour corriger le message. Ce mécanisme consiste à comparer simultanément dans les trois messages de la même session chaque bit un à un et de sélectionner la valeur de bit identique pour au moins deux des messages dupliqués. Le message une fois reconstruit est transmis à l'entité cible.

Les trois messages peuvent provenir de trois commutateurs de sortie différents chacun ayant reçu un signal optique dupliqué par le duplicateur optique et contenant chacun un message d'une même session. Ou comme expliqué ci-après, les trois messages peuvent provenir d'une répétition d'un même message transmis par l'unité d'entrée et chacun contenu dans un signal optique dupliqué en plusieurs signaux optiques par le duplicateur optique.

Le système de transmission optique peut comprendre également une duplication logicielle du message à transmettre, appelée encore duplication active. On entend par duplication active une duplication supervisée par l'unité d'entrée. Le même message est transmis plusieurs fois par l'unité d'entrée. Lors de la duplication logicielle, des paquets contenant le même message ne sont pas identiques. En effet, l'entête de chaque paquet change en fonction du mécanisme de marquage. L'unité d'entrée marque dans chaque message le numéro de session du message et le numéro de répétition du message qui est différent d'un paquet à un autre. Ainsi, le champ port source de l'entête peut comprendre également un sous-champ de bits réservé pour indiquer le numéro de répétition d'un même message. Par exemple, un sous-champ de 2 bits permet de répéter jusqu'à 4 fois le même message appartenant à une même session.

A la transmission de ces messages répétés, chaque signal optique contenant chaque paquet est dupliqué par le duplicateur optique vers au moins deux commutateurs de sortie augmentant, de ce fait, le nombre de messages identiques transmis vers l'entité cible. Statistiquement, l'envoi multiple d'un même message entre l'unité d'entrée et l'unité de sortie augmente la probabilité d'une transmission intègre.

L'unité de sortie à la réception de ces messages va les mémoriser dans une mémoire, les classer selon leur marquage et sélectionner le message intègre ou corriger le message en fonction de l'ensemble des messages d'une même session reçus.

Comme indiqué précédemment, l'unité d'entrée UE peut transmettre via le système de transmission des messages de contrôle à destination de l'unité de sortie permettant de configurer et de synchroniser les deux unités UE et US. Le message de contrôle transmis à intervalle de temps régulier, avec ou sans paramètre de supervision, permet d'indiquer à l'unité de sortie le bon fonctionnement du système de transmission. Le message de contrôle peut être considéré dans ce cas comme le battement de coeur du système. Si le message de contrôle ne parvient pas à l'unité de sortie à temps, l'unité de sortie détectera donc une défaillance du système de transmission.

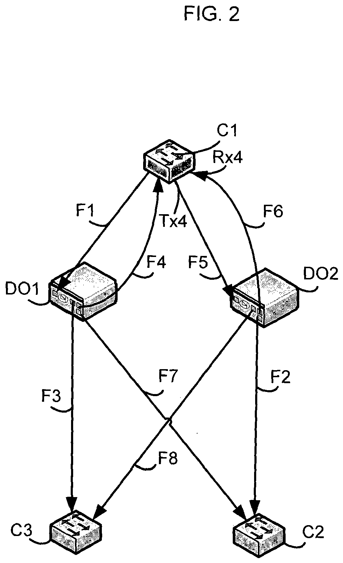

La figure 2 représente une variante de réalisation du dispositif de transmission optique d'un système de transmission unidirectionnel de message de haute disponibilité. Ce système comprend au moins un commutateur d'entrée C1, deux commutateurs de sortie C2, C3 et deux duplicateurs optiques D01, DO2.

Les éléments C1, D01, C2 et C3 sont connectés comme décrits précédemment en référence à la figure 1. Le commutateur d'entrée C1 comprend également une deuxième carte optique comportant un deuxième transmetteur Tx4 et un deuxième récepteur Rx4. Le récepteur Tx4 est connecté à l'entrée du deuxième duplicateur optique DO2 par l'intermédiaire d'une cinquième liaison optique F5. Une des sorties du duplicateur optique DO2 est connectée au deuxième récepteur Rx4 par l'intermédiaire d'une sixième liaison optique F6 qui permet le retour de contrôle de fonctionnement du duplicateur DO2.

Les commutateurs de sorties C2, C3 comprennent également chacun une deuxième carte optique comportant un deuxième transmetteur, et un deuxième récepteur. Chaque deuxième récepteur est connecté à une des sorties du duplicateur DO2 respectivement par l'intermédiaire d'une liaison optique F7, F8.

Ainsi, en fonctionnement par défaut du système de transmission, c'est le commutateur C1, la diode D01 et les commutateurs C2 et C3 qui transmettent le message de l'unité d'entrée vers l'unité de sortie.

Si le commutateur C1 détecte, par non retour du signal optique dupliqué, que le duplicateur DO1 est défectueux, il transmet le signal optique vers le deuxième duplicateur DO2 qui va dupliquer le signal et le transmettre vers les deux commutateurs C2 et C3.

Dans cette réalisation, une défaillance du commutateur C1 n'est pas prise en compte.

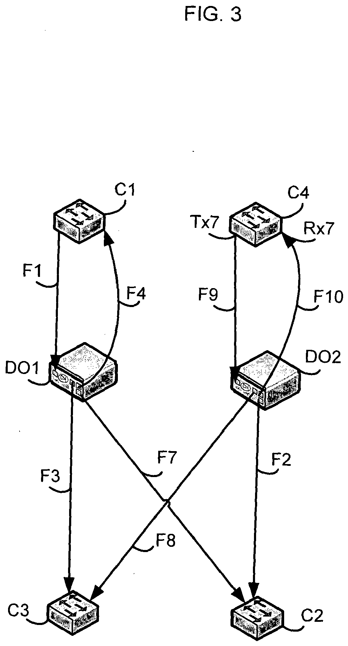

La figure 3 représente une autre réalisation du dispositif de transmission optique d'un système de transmission unidirectionnel de message de haute disponibilité. Ce système comprend au moins deux commutateurs d'entrée C1, C4, deux commutateurs de sortie C2, C3 et deux duplicateurs optiques DO1, DO2.

Les éléments C1, D01, C2 et C3 sont connectés comme décrits précédemment en référence à la figure 1. Les éléments DO2, C2 et C3 sont connectés comme décrits précédemment en référence à la figure 2. Le deuxième commutateur d'entrée C4 comprend une carte optique comportant un transmetteur Tx7 et un récepteur Rx7. Le transmetteur Tx7 est connecté à l'entrée du deuxième duplicateur optique DO2 par l'intermédiaire d'une liaison optique F9. Une des sorties du duplicateur optique DO2 est connectée au récepteur Rx7 par l'intermédiaire d'une liaison optique F10 qui permet le retour de contrôle de fonctionnement du duplicateur DO2. Ainsi si une défaillance du commutateur par défaut C1 est détectée par l'unité d'entrée, l'unité d'entrée va transmettre le message vers le deuxième commutateur de sortie C4 qui fera transiter le message vers l'unité de sortie par l'intermédiaire du duplicateur DO2 et des commutateurs de sortie C2 et C3.

Une autre réalisation d'un tel système de transmission à haute disponibilité peut être implémentée en connectant à chaque commutateur d'entrée de la figure 3 respectivement deux duplicateurs optiques comme représenté à la figure 2. Ainsi si le commutateur d'entrée par défaut est défaillant et si l'un des duplicateurs optiques connectés au commutateur de secours est également défaillant alors le signal pourra toujours transiter par l'intermédiaire du commutateur de secours, du duplicateur optique de secours connecté au commutateur de secours et des deux commutateurs de sorties.

## Revendications

1. Système de transmission d'un message depuis une entité source (ES) vers une entité cible (EC), le système comprenant une unité d'entrée (UE) connectée à l'entité source pour transmettre le message par l'intermédiaire d'un dispositif de transmission optique (DTO) à une unité de sortie (US) redirigeant le message vers l'entité cible, le système étant **caractérisé en ce que** le dispositif de transmission optique est apte:
- à transmettre de manière unidirectionnelle le message depuis l'unité d'entrée (UE) vers l'unité de sortie (US), et
- à dupliquer un signal optique d'entrée contenant le message en au moins deux signaux optiques de sortie contenant respectivement le message à transmettre à l'unité de sortie (US),
le dispositif de transmission optique (DTO) comportant :
- un commutateur optique d'entrée (C1) pour recevoir le message provenant de l'entité source (ES) et inclure le message dans un signal optique à transmettre à un duplicateur optique (DO1) par l'intermédiaire d'une première liaison optique (F1),
- le duplicateur optique (D01) pour dupliquer le signal optique reçu en au moins deux signaux optiques à transmettre respectivement à au moins deux commutateurs optiques de sortie (C2, C3) par l'intermédiaire respectivement de deux liaisons optiques (F2, F3), et
- au moins les deux commutateurs optiques de sortie (C2, C3) pour retransmettre les messages des deux signaux optiques dupliqués vers l'entité cible (EC),
- une liaison optique de retour (F4) pour transmettre à l'unité d'entrée (UE) un signal dupliqué.

2. Système de transmission conforme à la revendication 1, dans lequel l'unité d'entrée (UE) comprend un mécanisme de duplication logicielle du message pour transmettre une série de messages identiques.

3. Système de transmission conforme à l'une des revendications précédentes, dans lequel l'unité d'entrée (UE) comprend un mécanisme de marquage des messages par session.

4. Système de transmission conforme à l'une des revendications précédentes, dans lequel l'unité d'entrée (UE) comprend un mécanisme de marquage des messages par duplication logicielle.

5. Système de transmission conforme à l'une des revendications précédentes, dans lequel l'unité de sortie (US) comprend un mécanisme de dé-doublonnage de message pour détecter les messages dupliqués par logiciel et/ou par le duplicateur optique.

6. Système de transmission conforme à l'une des revendications précédentes, dans lequel l'unité de sortie (US) comprend un mécanisme de correction et de reconstruction du message.

7. Système de transmission conforme à l'une des revendications précédentes, comprenant un mécanisme de battement de coeur généré par l'unité d'entrée (UE) et contrôlé par l'unité de sortie (US) pour contrôler le fonctionnement du système de transmission.

8. Système de transmission conforme à la revendication 1, dans lequel le dispositif de transmission optique (DTO) comprend un duplicateur optique de secours (DO2) relié en entrée au commutateur optique d'entrée (C1) et en sortie aux deux commutateurs optiques de sortie (C2, C3).

9. Système de transmission conforme à la revendication 1, dans lequel le dispositif de transmission optique comprend un commutateur optique de secours (C4) relié à l'entrée d'au moins un duplicateur optique de secours (DO2), le duplicateur optique de secours étant relié en sortie aux deux commutateurs optiques de sortie (C2, C3).

## Patentansprüche

1. Übertragungssystem einer Nachricht von einer Quellentität (ES) zu einer Zielentität (EC), wobei das System eine Eingangseinheit (UE) umfasst, die an die Quellentität angeschlossen ist, um die Meldung anhand einer optischen Übertragungsvorrichtung (DTO) auf eine Ausgangseinheit (US) zu übertragen, die die Nachricht zu der Zielentität zurückleitet, wobei das System **dadurch gekennzeichnet ist, dass** die optische Übertragungsvorrichtung geeignet ist:
- die Nachricht unidirektional von der Eingangseinheit (UE) zu der Ausgangseinheit (US) zu übertragen und;
- ein optisches Eingangssignal zu duplizieren, das die Nachricht in wenigstens zwei optischen Ausgangssignalen enthält, die jeweils die auf die Ausgangseinheit (US) zu übertragende Nachricht enthalten,
wobei die optische Übertragungsvorrichtung (DTO) umfasst:
- einen optischen Eingangsschalter (C1) zum Empfangen der aus der Quellentität (ES) stammenden Nachricht und zum Einbetten der Nachricht in ein optisches Signal, das anhand einer ersten optischen Verbindung (F1) auf einen optischen Duplikator (DO1) zu übertragen ist,
- den optischen Duplikator (DO1) zum Duplizieren des empfangenen optischen Signals in wenigstens zwei optische Signale, die jeweils auf wenigstens zwei optische Ausgangsumschalter (C2, C3) anhand von jeweils zwei optischen Verbindungen (F2, F3) zu übertragen sind, und
- wenigstens die zwei optischen Ausgangsumschalter (C2, C3), um die Nachrichten der zwei duplizierten optischen Signale auf die Zielentität (EC) erneut zu übertragen,
- eine optische Rückverbindung (F4) zum Übertragen eines duplizierten Signals auf die Eingangseinheit (UE).

2. Übertragungssystem gemäß Anspruch 1, bei dem die Eingangseinheit (UE) einen Software-Duplizierungsmechanismus der Nachricht umfasst, um eine Serie von identischen Nachrichten zu übertragen.

3. Übertragungssystem gemäß einem der voranstehenden Ansprüche, bei dem die Eingangseinheit (UE) einen Markierungsmechanismus der Nachrichten pro Sitzung umfasst.

4. Übertragungssystem gemäß einem der voranstehenden Ansprüche, bei dem die Eingangseinheit (UE) einen Markierungsmechanismus der Nachrichten per Software-Duplizierung umfasst.

5. Übertragungssystem gemäß einem der voranstehenden Ansprüche, bei dem die Ausgangseinheit (US) einen Ent-Dopplungsmechanismus der Nachricht umfasst, um die per Software und / oder per optischem Duplikator duplizierten Nachrichten zu erfassen.

6. Übertragungssystem gemäß einem der voranstehenden Ansprüche, bei dem die Ausgangseinheit (US) einen Korrektur- und Rekonstruktionsmechanismus der Nachricht umfasst.

7. Übertragungssystem gemäß einem der voranstehenden Ansprüche, umfassend einen Herzschlagmechanismus, der durch die Eingangseinheit (UE) generiert und durch die Ausgangseinheit (US) kontrolliert wird, um den Betrieb des Übertragungssystems zu kontrollieren.

8. Übertragungssystem gemäß Anspruch 1, bei dem die optische Übertragungsvorrichtung (DTO) einen optischen Hilfsduplikator (D02) umfasst, der am Eingang an den optischen Eingangsumschalter (C1) und am Ausgang an zwei optische Ausgangsumschalter (C2, C3) angeschlossen ist.

9. Übertragungssystem gemäß Anspruch 1, bei dem die optische Übertragungsvorrichtung einen optischen Hilfsumschalter (C4) umfasst, der am Eingang an wenigstens einen optischen Hilfsduplikator (DO2) angeschlossen ist, wobei der optische Hilfsduplikator am Ausgang an die zwei optischen Ausgangsumschalter (C2, C3) angeschlossen ist.

## Claims

1. System for transmitting a message from a source entity (ES) to a target entity (EC), with the system comprising an input unit (UE) connected to the source entity in order to transmit the message by the intermediary of an optical transmission device (DTO) to an output unit (US) re-directing the message to the target entity, with the system **characterised in that** the optical transmission device is able:
- to transmit the message unidirectionally from the input unit (UE) to the output unit (US),and
- to duplicate an optical input system containing the message into at least two optical output signals respectively containing the message to be transmitted to the output unit (US),
with the optical transmission device (DTO) comprising:
- an optical input switch (C1) for receiving the message coming from the source entity (ES) and for including the message in an optical signal to be transmitted to an optical duplicator (DO1) by the intermediary of a first optical connection (F1),
- the optical duplicator (DO1) for duplicating the optical signal received into at least two optical signals to be transmitted respectively to the at least two optical output switches (C2, C3) by the intermediary respectively of two optical connections (F2, F3), and
- at least the two optical output switches (C2, C3) for retransmitting the messages of the two duplicated optical signals to the target entity (EC),
- an optical return connection (F4) for transmitting to the input unit (UE) a duplicated signal.

2. System for transmitting in accordance with claim 1, wherein the input unit (UE) comprises a software duplication mechanism of the message in order to transmit a series of identical messages.

3. System for transmitting in accordance with one of the preceding claims, wherein the input unit (UE) comprises a mechanism for marking messages by session.

4. System for transmitting in accordance with one of the preceding claims, wherein the input unit (UE) comprises a mechanism for marking messages by software duplication.

5. System for transmitting in accordance with one of the preceding claims, wherein the output unit (US) comprises a mechanism for removing duplicate messages in order to detect messages duplicated by the software and/or by the optical duplicator.

6. System for transmitting in accordance with one of the preceding claims, wherein the output unit (US) comprises a mechanism for correcting and reconstructing the message.

7. System for transmitting in accordance with one of the preceding claims, comprising a heartbeat mechanism generated by the input unit (UE) and controlled by the output unit (US) for controlling the operation of the transmission system.

8. System for transmitting in accordance with claim 1, wherein the optical transmission device (DTO) comprises a back-up optical duplicator (DO2) connected as input to the optical input switch (C1) and as output to the two optical output switches (C2, C3).

9. System for transmitting in accordance with claim 1, wherein the optical transmission device comprises a back-up optical switch (C4) connected to the input of at least one back-up optical duplicator (DO2), with the back-up optical duplicator being connected as output to the two optical output switches (C2, C3).
